# EUROPEAN PATENT SPECIFICATION

(11) **EP 1 510 425 B1**
(45) Date of publication and mention of the grant of the patent: **05.04.2006**
(21) Application number: 03380195.2
(22) Date of filing: 29.08.2003
(51) Int. Cl.: B60T 7/06, B60R 21/09, B62D 1/19

(54) **Mechanism for release of the brake pedal of a vehicle in the event of collision**
Mechanismus für Freischaltung des Bremspedals eines Fahrzeuges bei Kollision
Mécanisme pour désaccoupler la pedale de frein lors d'une collision.

(43) Date of publication of application: 02.03.2005
(73) Proprietor: Autotech Engineering, A.I.E., 48220 Abadino (Vizcaya) (ES)
(72) Inventor: Castillo Gonzalez, Jaime, 48220 Abadino (Vizcaya) (ES)
(74) Representative: Carpintero Lopez, Francisco

(56) References cited:
- EP-A- 1 179 461
- DE-A- 4 335 511
- US-A- 5 778 732
- US-A1- 2003 052 481
- US-B1- 6 336 376
- US-B1- 6 375 220
- PATENT ABSTRACTS OF JAPAN vol. 010, no. 253 (M-512), 29 August 1986 (1986-08-29) & JP 61 081851 A (HONDA MOTOR CO LTD), 25 April 1986 (1986-04-25)

## Description

### OBJECT OF THE INVENTION

The present invention relates to a mechanism for release of the brake pedal incorporated in a pedal assembly of a vehicle which allows the release of the brake pedal in the event of a collision of the vehicle occurring with displacement of the steering column.

An object of the invention is that in the event of collision the mechanism incorporated in the brake pedal determines the release of the shaft of rotation of the pedal from its supports, so that the pedal is free and does not constitute an obstacle to the normal progress of the steering column thereby impeding displacements of the column in an undesired direction and so preventing the driver from suffering injury.

It is also an object of the invention that the steering column itself determines, in its displacement resulting from a collision, the actuation of the mechanism for release of the brake pedal. This release mechanism can be also applicable to the clutch pedal.

### BACKGROUND OF THE INVENTION

When a head-on collision of a vehicle takes place, be this against an object or against another vehicle major displacements take place in the interior of the vehicle, be this of the engine, of the steering column or of other elements which prove to be highly dangerous insofar as they are introduced into the space where the driver is located.

The steering column for example can move sideways and impact against the brake pedal which is located alongside, which determines that the steering column finds its progress impeded and forces of reaction are originated which will modify the course of displacement of the column and conclude by impacting against the driver causing him serious injury.

In its conventional design the pedal has a hollow tube riveted or welded to the actual body of the pedal which rotates around a cylindrical axle which traverses it and which in turn is attached by its ends to corresponding supports by means of nuts. In the event of collision of the vehicle the pedal will usually continue attached to its axle of rotation and will constitute an obstacle to the displacement of the steering column.

With the aim of preventing the intrusion of these elements into the interior of the vehicle, components and systems are designed that are intended to reduce or remove the negative effects that these intrusions can have for the driver. The document US2003/052481 A1 describes a device according to the preamble of claim 1.

This is for example the case of European Patent Application 03380084 belonging to the author of the present invention entitled "Vehicle Pedal Assembly with system for release of the brake pedal in the event of collision" which relates to a pedal assembly which fundamentally incorporates a rocker arm which is fastened to some supports by means of an axle of rotation and individual links, some bands being firmly mounted on the rocker arm which together with other bands fixed to the supports define a space in which a solid bar rotates which constitutes the axle of rotation of the pedal. When a collision occurs, the support of the column strikes against the rocker arm, breaking the links, the rocker arm then rotates liberating the solid bar and thereby freeing the brake pedal which ceases to constitute an obstacle for the displacement of the steering column.

### DESCRIPTION OF THE INVENTION

The mechanism for release of the brake pedal of a vehicle in the event of collision which constitutes the object of this invention offers an alternative solution to allow the progress of the steering column in the event of collision of the vehicle so that the brake pedal does not suppose an obstacle resisting the displacement of the steering column and avoids causing injury to the driver.

It is a matter of having the actual support of the steering column act on the mechanism when the collision takes place so that the brake pedal ceases to swivel with respect to its axle of rotation and is left turning freely around an intermediate rigid point corresponding to the coupling of the rod that constitutes the hydraulic control of the brake.

During normal use of the pedal assembly the release mechanism is completely blocked with no possibility whatever of movement. When a collision takes place the mechanism changes to a different kinematic configuration which determines the loss of one of the brake supports and which allows it to obtain freedom of movement.

During normal operation of the pedal assembly the brake pedal rotates around an axle consisting of a solid screw which traverses it and which rests on individual semicircular lugs defined in corresponding lateral supports. In correspondence with said semicircular lugs, the mechanism incorporates respective clamps, one on each side of the pedal, which have a semicircular recess which holds together with the lugs the screw or axle of rotation of the brake pedal.

The clamps are articulated by individual frontal half-shafts with respect to the lateral supports and by individual rear grooves which engage on an upper axle joined to a connecting rod, which upper axle likewise rests in grooves defined in the lateral supports. This connecting rod situated between the clamps has in turn a lower axle which is articulated with respect to an operating lever, which is turned by means of corresponding half-shafts with respect to the lateral supports.

When the brake pedal is worked, in the normal operation of the pedal assembly, the latter rotates around the screw which constitutes the axle of rotation. In this situation the force applied to the pedal is transmitted through the screw to the clamps, which by means of their grooves tend to rotate the connecting rod anticlockwise, the latter also endeavours to rotate the lever in the same direction, the lever encountering its rotation impeded with respect to its lateral supports because it comes up against some butts welded to said supports. The clamps therefore cannot be separated from the supports nor consequently can the pedal, which will only rotate around the screw or axle of rotation.

In the event of trying to turn the clamps in the clockwise direction, the rotation would likewise be impeded by the force of reaction of the lateral supports on the axle of the pedal.

In the moment of a collision occurring, the support of the steering column is displaced relatively against the pedal assembly striking against the lever. This collision tends to turn the lever clockwise, which in turn makes the connecting rod rotate clockwise with respect to its upper axle on which the clamps are coupled, a slight bending or deformation taking place of the clamps which are doubly supported, a first support comprising the half-shafts of rotation of the supports and a second support comprising the screw or axle of rotation of the pedal. This deformation determines that the connecting rod can rotate until the upper and lower axles of the connecting rod are in line with the half-shafts of rotation defined between the lever and the supports.

This alignment corresponds to a new kinematic configuration, since from that point if the steering column continues advancing, the rotation of the lever in the clockwise direction gives rise to the clamps of the connecting rods being released and to the clamps rotating anticlockwise with respect to their half-shafts of rotation releasing the axle of rotation of the pedal and therefore the pedal itself.

The brake pedal is therefore free to rotate around its coupling with the hydraulic control rod. In this situation the pedal does not imply an obstacle for the steering column.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

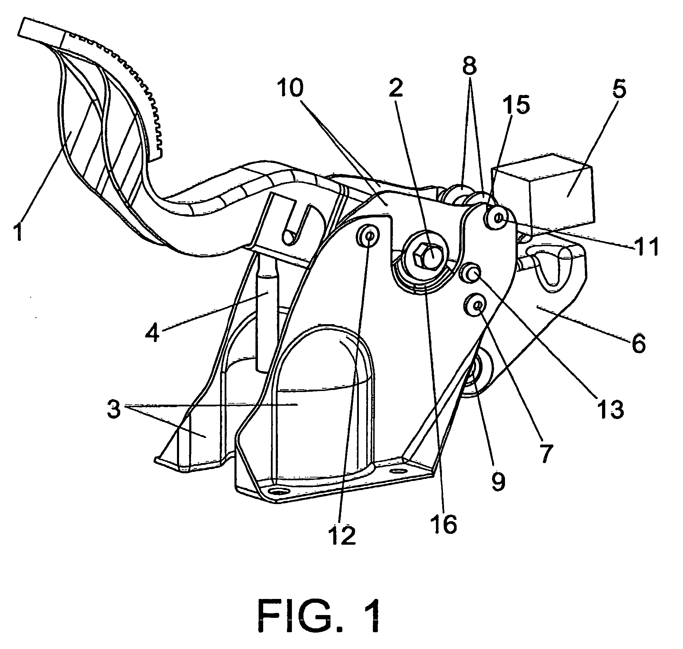

Figure 1. - It shows a general view in perspective of the pedal assembly in which can be appreciated the support of the steering column, the brake pedal and its supports, and the mechanism for release of the brake pedal.

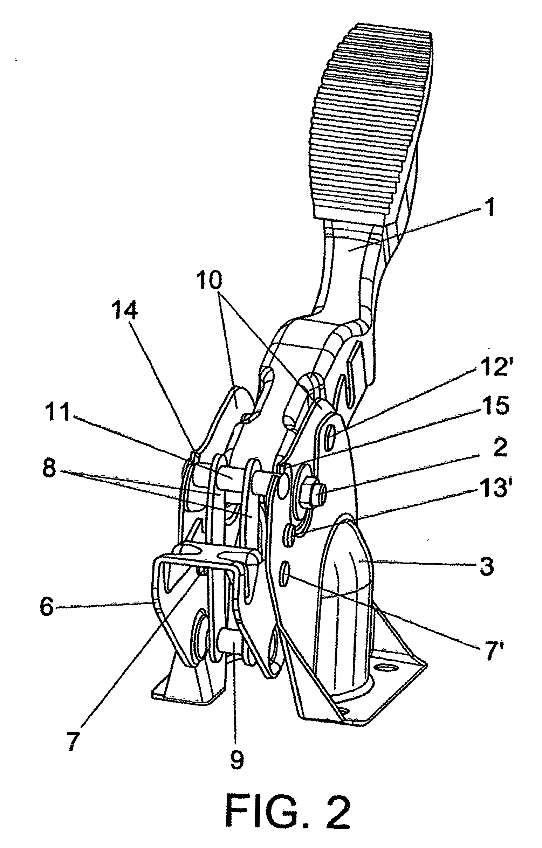

Figure 2. - It shows a general view in perspective of the pedal assembly seen from behind in which one appreciates in greater detail the elements which constitute the release mechanism, such as the operating lever, the connecting rod, the clamps and the different axles of articulation.
Figure 3. - It shows a side view of the pedal assembly before collision in which one of the supports has not been represented for a clearer appreciation of the operating lever, connecting rod and clamps.

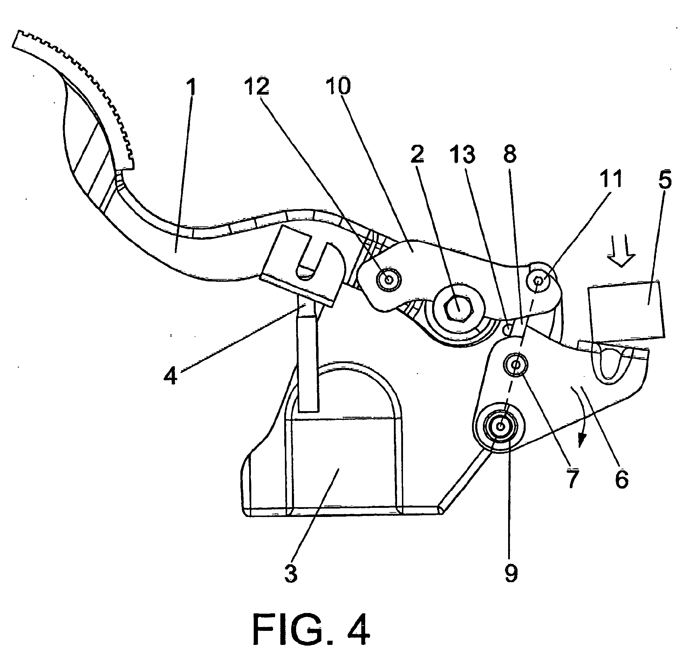

Figure 4. - It shows a side view of the pedal assembly during collision in which one of the supports has not been represented, wherein the support of the displaced steering column can be appreciated striking the lever at the moment of alignment of the axles.

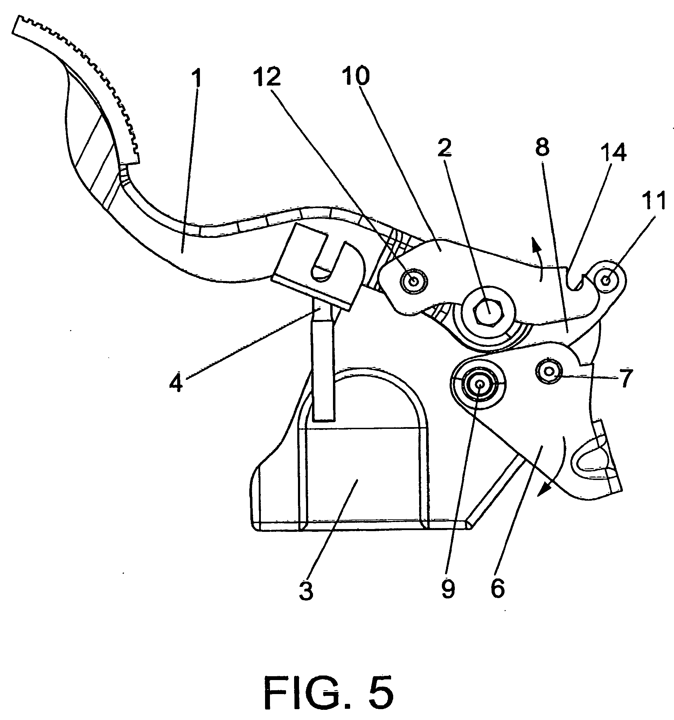

Figure 5. - It shows a side view of the pedal assembly in a sequence subsequent to the collision in which one of the supports has not been represented, wherein the rotation of the lever and the release of the clamps are observed.

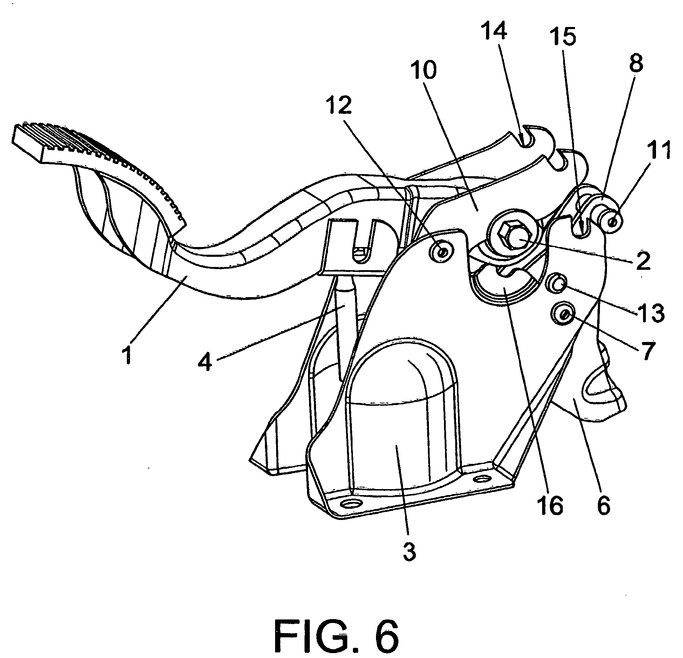

Figure 6. - It shows a view in perspective of the pedal assembly in a sequence subsequent to the collision in which the release of the brake pedal axle is appreciated.

### PREFERED EMBODIMENT OF THE INVENTION

The mechanism for release of the brake pedal of a vehicle in the event of collision which constitutes the object of this invention is of application in a pedal assembly located after the support of the steering column (5), which incorporates basically a brake pedal (1) which has a screw or axle of rotation (2) linked by its ends to individual lateral supports (3) located at each side of the brake pedal (1) and a hydraulic control (4) associated with the brake pedal (1).

Starting from this configuration the mechanism for release of the brake pedal is distinguished by the incorporation of an operating lever (6) located in the path corresponding to the displacement of the support of the steering column (5) in the event of collision, which comprises half-shafts of rotation (7-7') at both sides which swivel with respect to the lateral supports (3), and also it swivels with respect to a lower axle (9) joined to a connecting rod (8), which likewise has an upper axle (11) which in normal operation of the brake pedal (1) rests in individual grooves (15) made in the lateral supports (6) and in individual grooves (14) directed upwards defined in corresponding clamps (10).

It has been foreseen that the clamps (10) swivel by means of some half-shafts (12-12') with respect to the lateral supports (3) and that they hold the axle of rotation (2) of the brake pedal (1) by means of some semicircular recesses made in the same which form, together with some semicircular lugs (16) defined in the lateral supports (3), the supports around which the axle of rotation (2) of the brake pedal (1) rotates.

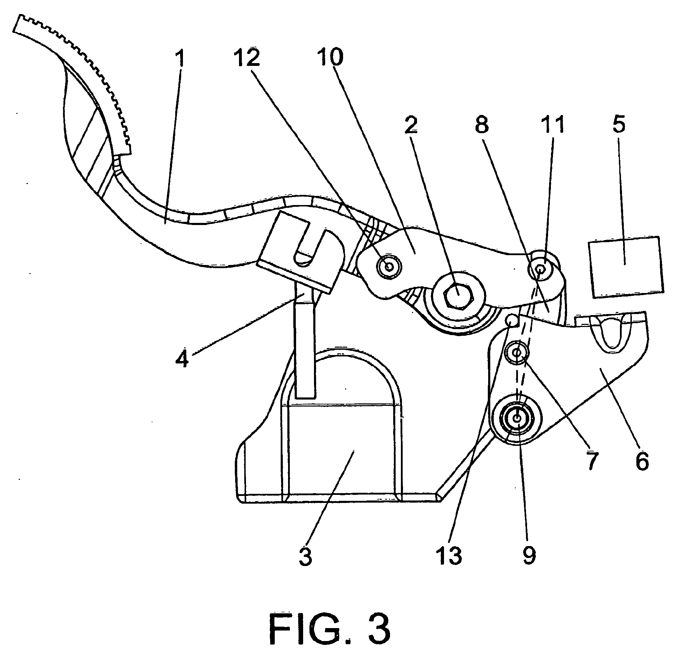

During normal operation of the brake pedal (1), the upper axle (11) of the connecting rod (8) and the lower axle (9) of the connecting rod (8) are out of alignment with respect to the half-shafts (7-7'), as can be appreciated in figure 3, which determines that the forces applied to the brake pedal (1) tend to make the clamps (10) rotate anticlockwise, which in turn tend to make the connecting rod (8) rotate and thereby the lever (6) turn anticlockwise, however the rotation of the lever (6) is impeded by some butts (13-13') located in the lateral supports (3) against which the lever (16) makes contact. The clamps (10) remain likewise immobile, the supports of the axle of rotation (2) of the brake pedal (1) remaining invariable so the brake pedal (1) rotates around these with no difficulty.

When the vehicle suffers a collision, the steering column (5) support hits the operating lever (6) sharply causing it to turn clockwise, then the operating lever (6) makes the connecting rod (8) rotate and this in turn the clamps (10) in the clockwise direction, the latter encountering their rotation impeded by the pedal axle (2). The force of the collision is sufficient to deform (10) and make the clamps bend at the end where the upper axle (11) is located so that the alignment takes place of the upper axle (11), lower axle (9) and half-shafts (7-7'). The support of the steering column (5) continues pushing the lever (6) in the clockwise direction surpassing the alignment position, so the mechanism adopts a new kinematic configuration such that the connecting rod (8) tends to make the clamps (10) rotate anticlockwise.

This gives rise to the upper axle (11) leaving the grooves (15) of the lateral support (3) and the grooves (14) of the clamps (10), and to the clamps (10) can rotating freely in the anticlockwise direction around their half-shafts (12-12') to release the pedal axle (1) from its housing, the brake pedal (1) being freed from some of its supports and thereby ceasing to constitute an obstacle for the progress of the steering column.

## Claims

1. Mechanism for release of the brake pedal of a vehicle in the event of collision, of application for a pedal assembly located after the support of the steering column (5), which incorporates a brake pedal (1) which has a screw or axle of rotation (2) linked by its ends to individual lateral supports (3) located at each side of the brake pedal (1) and a hydraulic control (4) of the brake associated with the brake pedal (1), **characterised in that** it has an operating lever (6) which comprises some half-shafts of rotation (7-7') at both sides which swivel with respect to the lateral supports (3), and also it swivels with respect to a lower axle (9) joined to a connecting rod (8), which likewise has an upper axle (11) which in normal operation of the brake pedal (1) rests in individual grooves (15) made in the lateral supports (3) and in individual grooves (14) directed upwards defined in corresponding clamps (10) which swivel by means of some half-shafts (12-12') with respect to the lateral supports (3), which clamps (10) hold the axle of rotation (2) of the brake pedal (1) by means of some semicircular recesses made in the same which form together with some semicircular lugs (16) defined in the lateral supports (3), the supports around which the axle of rotation (2) of the brake pedal (1) rotates, it having been foreseen that the operating lever (6) is in the path corresponding to the displacement of the support of the steering column (5) in the event of collision, which results at this instant in the turning of the lever (6) clockwise which in turn tends to make the connecting rod (8) rotate and this in turn the clamps (10) clockwise, which find their rotation impeded by the pedal axle (2) and are deformed until the upper axle (11), lower axle (9) and half-shafts (7-7') are aligned, which position is surpassed by the thrust of the lever (6) until another cinematic configuration is reached which releases the axle (11) from the grooves of the lateral support (14) and from the grooves (15) of the clamps (10), making the clamps (10) rotate anticlockwise with respect to their half-shafts (12-12') to release the pedal axle (2) from its supports, leaving the brake pedal (1) free and ceasing to constitute an obstacle for the progress of the steering column.

2. Mechanism for release of the brake pedal of a vehicle in the event of collision according to claim 1 **characterised in that** the lateral supports (3) have some welded butts (13-13') against which the lever (6) makes contact impeding its rotation when the actuation of the brake pedal (1) in normal operation determines that the forces applied on the latter tend to make the lever (6) rotate anticlockwise, in this situation the upper axle (11) of the connecting rod (8) and the lower axle (9) of the connecting rod (8) being out of alignment with respect to the half-shafts (7-7'), and the clamps (10) immobile, the supports of the axle of rotation (2) of the brake pedal (1) remaining invariable so that the brake pedal (1) rotates with no difficulty around these.

## Patentansprüche

1. Mechanismus zum Lösen des Bremspedals eines Fahrzeugs im Fall eines Zusammenstoßes zur Anwendung für einen hinter der Halterung der Lenksäule (5) befindlichen Pedalaufbau, der ein Bremspedal (1) beinhaltet, das eine Schraube oder Drehachse (2) aufweist, die durch ihre Enden mit einzelnen seitlichen Halterungen (3) verbunden ist, welche sich an jeder Seite des Bremspedals (1) befinden, und eine zum Bremspedal (1) gehörige hydraulische Steuerung (4) der Bremse beinhaltet, **dadurch gekennzeichnet, dass** er einen Bedienungshebel (6) aufweist, der an beiden Seiten einige Drehhalbwellen (7 - 7') umfasst, die in Bezug auf die seitlichen Halterungen (3) schwenken, und der auch in Bezug auf eine untere Achse (9) schwenkt, welche mit einer Verbindungsstange (8) verbunden ist, die ebenfalls eine obere Achse (11) aufweist, welche beim Normalbetrieb des Bremspedals (1) in einzelnen Vertiefungen (15) ruht, die in den seitlichen Halterungen (3) vorgesehen sind, und in einzelnen Vertiefungen (14) ruht, die aufwärts gerichtet sind und in entsprechenden Klammern (10) definiert sind, welche durch einige Halbwellen (12 - 12') in Bezug auf die seitlichen Halterungen (3) schwenken, welche Klammern (10) die Drehachse (2) des Bremspedals (1) durch einige halbkreisförmige, darin vorgesehene Aussparungen halten, welche zusammen mit einigen halbkreisförmigen Ansätzen (16), die in den seitlichen Halterungen (3) definiert sind, die Halterungen bilden, um die sich die Drehachse (2) des Bremspedals (1) dreht, wobei vorhergesehen wurde, dass sich der Bedienungshebel (6) in dem Weg befindet, der im Fall eines Zusammenstoßes der Verschiebung der Halterung der Lenksäule (5) entspricht, was in diesem Moment zu einer Drehung des Hebels (6) im Uhrzeigersinn führt, was wiederum dazu führt, dass die Verbindungsstange (8) zum Drehen gebracht wird, was wiederum die Klammern (10) im Uhrzeigersinn dreht, die ihre Drehung durch die Pedalachse (2) behindert finden und verformt werden, bis die obere Achse (11) die untere Achse (9) und die Halbwellen (7 - 7') ausgerichtet sind, welche Stellung durch den Schub des Hebels (6) übertroffen wird, bis eine andere kinematische Gestaltung erreicht wird, die die Achse (11) aus den Vertiefungen der seitlichen Halterung (14) und aus den Vertiefungen (15) der Klammern (10) löst, was die Klammern (10) in Bezug zu ihren Halbwellen (12 - 12') zur Drehung gegen den Uhrzeigersinn bringt, um die Pedalachse (2) von ihren Halterungen zu lösen, wodurch das Bremspedal (1) frei gelassen wird und aufhört, ein Hindernis für das Vorrücken der Lenksäule zu bilden.

2. Mechanismus zum Lösen des Bremspedals eines Fahrzeugs im Fall eines Zusammenstoßes nach Anspruch 1, **dadurch gekennzeichnet, dass** die seitlichen Halterungen (3) einige geschweißte Enden (13 - 13') aufweisen, mit denen der Hebel (6) in Kontakt tritt, was seine Drehung behindert, wenn die Betätigung des Bremspedals (1) im Normalbetrieb bestimmt, dass die auf letzteres ausgeübten Kräfte dazu neigen, den Hebel (6) zu einer Drehung gegen den Uhrzeigersinn zu bringen, wobei sich die obere Achse (11) der Verbindungsstange (8) und die untere Achse (9) der Verbindungsstange (8) in dieser Situation nicht in einer Ausrichtung in Bezug auf die Halbwellen (7 - 7') befinden, und die Klammern (10) unbeweglich sind, und die Halterungen der Drehachse (2) des Bremspedals (1) unveränderlich bleiben, so dass sich das Bremspedal (1) ohne Schwierigkeit um sie dreht.

## Revendications

1. Mécanisme de libération d'une pédale de frein d'un véhicule en cas de collision, adapté à un ensemble de pédale situé après le support d'une colonne de direction (5) qui incorpore une pédale de frein (1) qui a une vis ou axe de rotation (2) relié par ses extrémités à des supports latéraux individuels (3) situés de chaque côté de la pédale de frein (1) et une commande hydraulique (4) de frein associée à la pédale de frein (1), **caractérisé en ce qu'**il a un levier de fonctionnement (6) qui comprend deux demi-arbres de rotation (7-7') des deux côtés qui pivotent par rapport aux supports latéraux (3), et également il pivote par rapport à un axe inférieur (9) relié à une tige de connexion (8) qui de façon similaire à un axe supérieur (11) qui en fonctionnement normal de la pédale de frein (1) repose dans des rainures individuelles (15) ménagées dans les supports latéraux (3) et dans des rainures individuelles (14) dirigées vers le haut définies dans des brides de fixation correspondantes (10) qui pivotent au moyen de demi-arbres (12-12') par rapport aux supports latéraux (3), lesquelles brides de fixation (10) maintiennent l'axe de rotation (2) de la pédale de frein (1) au moyen d'évidements semi-circulaires ménagés dans celle-ci qui forment ensemble avec des oreilles semi-circulaires (16) définies dans les supports latéraux (3), les supports autour desquels l'axe de rotation (2) de la pédale de frein (1) tourne, ayant été envisagé que le levier de fonctionnement (6) est dans le chemin correspondant au déplacement du support de la colonne de direction (5) en cas de collision, ce qui résulte à cet instant en la rotation du levier (6) dans le sens des aiguilles d'une montre qui à son tour tend à faire tourner la tige de connexion (8) et entraîne à son tour les brides de fixation (10) dans le sens des aiguilles d'une montre, qui trouvent leur rotation empêchée par l'axe de pédale (2) et sont déformées jusqu'à ce que l'axe supérieur (11), l'axe inférieur (9) et les demi-arbres (7-7') soient alignés, laquelle position est dépassée par la poussée du levier (6) jusqu'à ce qu'une autre configuration cinématique soit atteinte qui libère l'axe (11) des rainures du support latéral (14) et des rainures (15) des brides de fixation (10), faisant tourner les brides de fixation (10) dans le sens contraire des aiguilles d'une montre par rapport à leurs demi-arbres (12-12') de manière à libérer l'axe de pédale (2) de ses supports, laissant la pédale de frein (1) libre et cessant de constituer un obstacle pour la progression de la colonne de direction.

2. Mécanisme de libération de pédale de frein d'un véhicule en cas de collision selon la revendication 1, **caractérisé en ce que** les supports latéraux (3) ont des bouts soudées (13-13') contre lesquelles le levier (6) vient en contact empêchant sa rotation lorsque l'actionnement de la pédale de frein (1) en fonctionnement normal détermine que les forces appliquées sur cette dernière tendent à faire tourner le levier (6) dans le sens contraire des aiguilles d'une montre, dans cette situation l'axe supérieur (11) de la tige de connexion (8) et l'axe inférieur (9) de la tige de connexion (8) étant hors de l'alignement par rapport aux demi-arbres (7-7') et les brides de fixation (10) immobiles, les supports de l'axe de rotation (2) de la pédale de frein (1) restant invariables de sorte que la pédale de frein (1) tourne sans aucune difficulté autour de ceux-ci.
